(19) **Europäisches Patentamt**

**European Patent Office**

**Office européen des brevets**

(11) **EP 0 822 332 B1**

(12) **EUROPÄISCHE PATENTSCHRIFT**

(45) Veröffentlichungstag und Bekanntmachung des Hinweises auf die Patenterteilung:
**17.10.2001 Patentblatt 2001/42**

(51) Int Cl.⁷: **F03B 15/04**, F03B 15/06, F03B 15/18

(21) Anmeldenummer: **96810514.8**

(22) Anmeldetag: **02.08.1996**

(54) **Wasserkraftanlage**

Hydraulic power station

Générateur hydraulique

(84) Benannte Vertragsstaaten:
**AT CH ES FR IT LI**

(43) Veröffentlichungstag der Anmeldung:
**04.02.1998 Patentblatt 1998/06**

(73) Patentinhaber: **VA TECH HYDRO GmbH & Co.
1140 Wien (AT)**

(72) Erfinder: **Dörfler, Peter, Dr.
8057 Zürich (CH)**

(74) Vertreter: **VA TECH Patente GmbH
Penzinger Strasse 76
1141 Wien (AT)**

(56) Entgegenhaltungen:
**EP-A- 0 435 182     US-A- 3 730 638
US-A- 4 097 183     US-A- 4 467 216**

- **PATENT ABSTRACTS OF JAPAN vol. 8, no. 120
(M-300) [1557] , 6.Juni 1984 & JP-A-59 025085
(KUBOTA TEKKO K.K.), 8.Februar 1984,**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

Printed by Jouve, 75001 PARIS (FR)

**Beschreibung**

Die Erfindung handelt von einer Wasserkraftanlage mit mindestens einem Generator und einer daran gekoppelten Turbine, beispielsweise einer Francis- oder Pumpenturbine, die ein verstellbares Regulierorgan wie einen verstellbaren beschaufelten Leitapparat aufweist, und mit einem Bypassventil, um mit einer Steuerung bei einem Schnellschluss SS des Regulierorgans respektive der Leitschaufeln in Abhängigkeit von der Schaufelstellung zur Verhinderung von einem Druckstoss das Bypassventil passend anzusteuern.

In Wasserkraftanlagen mit langen unter Innendruck stehenden Leitungen tritt bei rascher Aenderung der durchfliessenden Wassermenge Q ein erheblicher Anstieg oder Abfall des Innendrucks auf. Aus Gründen der Betriebssicherheit darf der Bemessungsdruck der Leitungen nicht überschritten werden, und andererseits darf auch meist an keiner Stelle einer Leitung ein nennenswerter Unterdruck auftreten. Um also die Druckänderungen innerhalb zulässiger Grenzen zu halten, muss die Aenderungsgeschwindigkeit dQ/dt des Durchflusses begrenzt werden.

Diese Begrenzung steht häufig im Widerspruch zu regelungstechnischen Anforderungen.

1. Wasserturbinensätze, insbesondere in Kraftwerken mit hohem Druckgefälle, bei welchen lange Druckleitungen die Regel sind, werden unter anderem zur Regelung eines elektrischen Netzes eingesetzt, wobei eine rasch veränderliche Leistungsabgabe von Vorteil ist.

2. Bei der Abschaltung (Lastabwurf, Schnellschluss) eines Turbinensatzes darf das Schliessen des Regelorgans der Turbine nicht zu langsam erfolgen, um zu vermeiden, dass die Drehzahl allzu hohe Werte erreicht.

Bei Anlagen mit Peltonturbinen ist dieser Widerspruch dadurch gelöst worden, dass bei Entlastungen und Abschaltungen ein Strahlablenker der Turbinen als zusätzliches Regulierorgan die Leistungsabgabe sehr rasch vermindert, ohne dass dabei der Durchfluss im gleichen Mass verringert wird. Der letztere hängt vielmehr nur von der Bewegung der Düsennadeln ab, welche wesentlich langsamer erfolgen kann.

Ein etwas anderer Weg wurde in der Vergangenheit bei Francisturbinen beschritten, welche nur über ein Regulierorgan, den Leitapparat, verfügen. Dieser Weg besteht darin, dass die Turbine durch ein zusätzliches Organ in Gestalt eines parallelgeschalteten Ventils (Bypass- oder Entlastungsventil, Druckregler, Durchflusskompensator) ergänzt wird. Wegen der Parallelschaltung entspricht der Durchfluss der Druckleitung der Summe der Durchflüsse von Turbine und Bypassventil.

$$Q = Q_T + Q_V$$

Im Falle einer raschen Entlastung der Turbine wird die Aenderungsrate des Gesamtdurchflusses Q dadurch begrenzt, dass ein wesentlicher Teil des rasch abnehmenden Turbinendurchflusses $Q_T$ durch entsprechenden Zuwachs des Durchflusses $Q_V$ kompensiert wird. Es wird also bei raschem Schliessen des Leitapparats der Turbine das Ventil geöffnet und erst später langsam geschlossen.

Eine bisher übliche Technik ist in der US-A-4,097,183 beschrieben. Sie besteht im wesentlichen darin, dass die Bewegung des Leitapparats über einen Mechanismus eine gegenläufige Bewegung des Schliesskörpers des Ventils bewirkt. Die Uebertragung kann mechanisch, ölhydraulisch oder auch elektrisch erfolgen. Wesentlich ist, dass ein Zusammenhang zwischen den beiden Stellbewegungen in Form einer Funktion hergestellt wird. Die Form dieser Funktion wird so gewählt, dass bei gegebener Drehzahl und Fallhöhe die Summe der beiden Durchflüsse annähernd konstant bleibt. Es ist ausserdem üblich, der so definierten Ausgleichsbewegung des Ventils eine permanente langsame Schliessbewegung zu überlagern, so dass über längere Zeit gesehen das Ventil stets wieder die Geschlossenstellung erreicht, die Aenderungsrate des Gesamtdurchflusses aber annähernd der überlagerten Schliessbewegung entspricht.

Das Vorgehen für diese Art der Auslegung ist beschrieben in "Water Power Development" Volume TWO/A (HIGH HEAD POWER PLANTS, von E. Mosonyi, Akademiai Kiado, Budapest 1991) auf den Seiten 354 bis 357.

Die beschriebene Methode erlaubt es, den Druckanstieg bei Lastabschaltungen vergleichsweise niedrig zu halten. Dennoch wird häufig nicht die gleiche Qualität erreicht wie bei einer vergleichbaren Peltonturbine.

Der als Folge der Aenderung der Wassermenge auftretende Druckstoss ist nicht nur als Druckwirkung an sich störend, nämlich durch mechanische Beanspruchung der wasserführenden Teile wie Druckleitung, Schieber, Turbinengehäuse etc., sondern hat auch auf die Regelung, insbesondere Drehzahl- und Leistungsregelung, einen stören-den Einfluss. Wird nämlich eine rasche Verminderung der Turbinenleistung gewünscht, so muss dies durch eine Schliessbewegung des Leitapparats, somit auch eine Verminderung des Durchflusses geschehen. Dabei tritt infolge des Druckstosseffekts vorübergehend eine Erhöhung der Leistung ein, d.h. der gegenteilige Effekt. Erst nach Abklingen dieses Effekts erreicht man die gewünschte Verminderung der Leistung. Dieser, als Leistungsgegenwirkung bezeichnete Effekt bildet eine physikalische Grenze für die Qualität der Regelung.

Die Verwendung eines Bypassventils mit herkömmlicher Steuerung vermindert diesen Effekt jedoch nur begrenzt. Diesem Umstand soll die vorliegende Erfindung abhelfen. Sie hat die Aufgabe bei sprunghaften Laständerungen Druckschwankungen in der Zuleitung klein zu halten. Diese Aufgabe wird mit den Kennzeichen der unabhängigen Ansprüche 1 und 3 dahingehend gelöst, dass ein Regelmodell verwendet wird, in welchem der Einfluss der momentanen Drehzahl bei einer bestimmten Schaufelstellung und Fallhöhe auf den Durchfluss der Turbine mit ausgewertet ist, um einen Sollwert für einen Ventildurchfluss $Q_V$ zu bestimmen, der einen wesentlich genaueren Abgleich zu einem vorgegebenen Gesamtdurchfluss darstellt. Die abhängigen Ansprüche 2 und 4 bis 9 stellen vorteilhafte Weiterbildungen der Erfindung dar.

Ein Vorteil der Erfindung besteht darin, dass als massgebende Grösse für die Kompensation des Durchflusses nicht mehr die Oeffnung, sondern der Durchfluss selbst benutzt wird. Um eine wesentlich verbesserte Genauigkeit zu erreichen, werden alle wesentlichen Einflüsse auf den Turbinendurchfluss, nämlich ausser der Oeffnung der Leitschaufeln auch Fallhöhe und ganz besonders die Drehzahl, berücksichtigt. Dies kann mit der Verwendung digitaler Regler vorteilhaft gelöst werden. Zwei der drei Variablen, Oeffnung A und Drehzahl n, stehen normalerweise als Messgrössen zur Verfügung. Die dritte, Fallhöhe H, kann entweder ebenfalls gemessen oder mit Hilfe eines mathematischen Modells (Beobachter) fortlaufend berechnet werden.

Aus den drei unabhängigen Einflussgrössen $A_T$, H, n lässt sich mittels eines mathematischen Modells der Turbine der Durchfluss berechnen. Des weiteren kann ein Soll-Verlauf des Gesamtdurchflusses berechnet werden, und zwar im Hinblick auf das Ziel geringer Druckvariation in der Leitung ein möglichst gleichmässiger. Die Differenz der beiden Durchflüsse entspricht der vom Ventil zu liefernden Wassermenge:

$$Q_V = Q_{soll} - Q_T$$

Aus der Fallhöhe und der bekannten Durchflusskennlinie des Ventils lässt sich nun der Sollwert der Ventilöffnung bestimmen. Schliesslich muss diese Oeffnung durch eine geeignete Positionsregelung fortlaufend eingestellt werden.

Diese Art der Regelung mit Kompensation der Durchflussänderung durch ein Bypassventil ist auch in anderen Betriebssituationen von Vorteil. Sie erlaubt es, in Perioden mit sprunghaften Lasterhöhungen das Bypassventil mit einem Durchfluss $Q_{VO}$ zu betreiben, der einem geringen Prozentsatz beispielsweise 4 % vom Durchfluss $Q_T$ der Turbine entspricht, um bei sprunghafter Vergrösserung der Oeffnung $A_T$ der Leitschaufeln die Ventilöffnung $A_V$ entsprechend zu verkleinern. Dadurch, dass in einer solchen Situation im Gegensatz zur US-A-4,097,183 ebenfalls der Durchfluss $Q_T$ der Turbine selbst erfasst wird, ist in der Anfangssituation der Lasterhöhung ein sehr genauer Abgleich möglich, der ein Ueberschwingen vom Durchfluss $Q_T$ und die damit verbundenen Druckschwankungen verringert und gleichzeitig die Drehzahlregelung erleichtert.

Die Anwendung der erfindungsgemässen Methode für Regelungsvorgänge in beiden Richtungen der Laständerung wird dadurch möglich, dass dem Ventil im Gleichgewichtszustand ein gewisser Durchfluss $Q_{VO}$ zugewiesen wird. Dieser stellt in energetischer Hinsicht zwar einen Verlust dar. Er kann jedoch so festgelegt werden, dass die Anlage durch Korrektur des Druckstoss-Effekts eine sonst unmögliche Regelaufgabe erfüllt. Es ist auch ohne weiteres möglich, den voreingestellten Durchfluss $Q_{VO}$ des Ventils einer wechselnden Betriebsaufgabe entsprechend nur vorübergehend grösser als Null einzustellen, dann nämlich, wenn die Verarbeitung einer relativ bedeutenden sprunghaften Lastzunahme kurzfristig erwartet wird.

Durch die Verwendung eines Rechners im Zusammenwirken mit digital ansteuerbaren Regeleinheiten, können vorgegebene Summenkurven $Q_T + Q_V$ wie z.B. Abklingkurven und Dämpfung jeweils aus den momentanen und sehr genau bestimmten Durchflusswerten $Q_T$ der Turbine ermittelt werden und direkt in der Regelung umgesetzt werden.

Falls mehrere Turbinen aus einer gleichen Zuleitung angespeist werden, ist es nicht mehr notwendig, jede Turbine mit einem Bypassventil zu versehen. Mit einem übergeordneten Regler, der Berechnungs- und Regelfunktionen wahrnimmt, kann ein Bypassventil mehreren Turbinen zugeordnet werden und so beispielsweise auch ein anderes, defektes Bypassventil ersetzen.

Im folgenden ist die Erfindung anhand von Ausführungsbeispielen beschrieben. Es zeigen:

Fig. 1     Schematisch die Anordnung von einer Turbine mit Leitapparat und mit einem ihr zugeordneten Bypassventil;

Fig. 2a     schematisch dimensionslos über der Zeit aufgetragen eine bisher im früheren Stand der Technik übliche Regelung der Ventilöffnung vom Bypassventil in Abhängigkeit von der Oeffnung der Turbinenschaufeln bei Schnellschluss SS;

Fig. 2b     schematisch dimensionslos über der Zeit aufgetragen den Verlauf von Drehzahl n, Fallhöhe H und dem Durchfluss $Q_T$ und $Q_V$ bei einem Schnellschluss gemäss Fig. 2a;

Fig. 3a     schematisch dimensionslos über der Zeit aufgetragen eine erfindungsgemässe Regelung der Ventilöffnung $A_V$ des Bypassventils, um einen der Abklingkurve $Q_{soll} = Q_T + Q_V$ in Fig. 3b entsprechenden Ventildurchfluss $Q_V$ zu erzeugen;

Fig. 3b     schematisch dimensionslos über der Zeit aufgetragen den Verlauf von Drehzahl n, Fallhöhe H und dem Durchfluss $Q_T$ und $Q_V$ mit einer erfindungsgemässen Regelung des Ventildurchflusses $Q_V$ bei Schnellschluss SS;

Fig. 4     schematisch dimensionslos über der Zeit aufgetragen den Verlauf von Drehzahl n und Fallhöhe H mit einer erfindungsgemässen Regelung des Bypassventils bei sprunghaften Lasterhöhungen am Generator, wobei von einem voreingestellten Durchflusses $Q_{VO}$ am Bypassventil ausgegangen wird;

Fig. 5     schematisch ein Blockdiagramm für eine Steuerung, die aus den Eingangsgrössen von Fallhöhe H, Drehzahl n und Oeffnung $A_T$ des Leitapparates einen Sollwert $A_{Vsoll}$ für die Oeffnung des Bypassventils ermittelt;

Fig. 6     schematisch ein Blockdiagramm analog zu Figur 5, wobei die momentane Stellung $A_V$ des Bypassventils als Eingangsgrösse mitverwendet ist, um die Fallhöhe H mit einem Druckstossmodell DSM zu berechnen und so auf einen Sollwert $A_{Vsoll}$ für das Bypassventil zu kommen; und

Fig. 7     schematisch ein nicht-lineares Modell für den Durchfluss $Q_T$ einer Turbine in einer Darstellung $Q_1 = Q / \sqrt{H}$, welcher in Abhängigkeit von einer auf die Fallhöhe bezogene Einheitsdrehzahl $n_1 = n / \sqrt{H}$ für konstante Oeffnungen des Leitapparates $A_T$ = const. dargestellt ist.

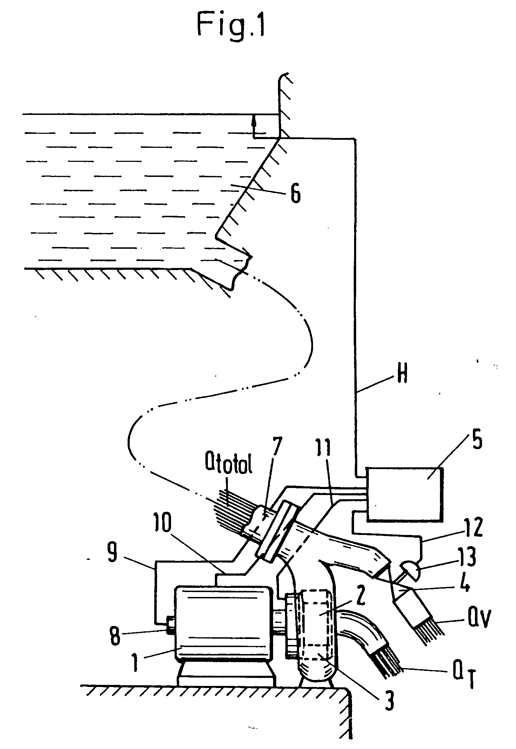

In den Figuren 1 bis 4 sind Verbesserungsmöglichkeiten für eine entsprechende Wasserkraftanlage dargestellt. In Figur 1 wird eine Francisturbine 2 mit einer Nennleistung von 65 MW bei einer Fallhöhe H von 143 m aus einem Reservoir 6 von einer Druckleitung 7 mit 1,6 km Länge ohne Wasserschloss gespeist. Die Zeitkonstanten dieses Systems sind (gemäss IEC Publikation 308, International code for testing speed governing systems for hydraulic turbines, 1970) Ta = 9.3s, Tw = 5.3s. Nach herkömmlichen Vorstellungen eignet sich diese Anlage nicht dazu, im sogenannten Inselbetrieb, d.h. ohne Verbindung zu einem grösseren elektrischen Netz, betrieben zu werden. Dies ist aber beispielsweise aus betrieblichen Gründen erforderlich. Ein Bypassventil 4 ist vorhanden und wird in herkömmlicher Technik bei Schnellschluss verwendet. Die Turbine 2 besitzt einen Leitapparat 3 und ist über ihr Laufrad mit einem Generator 1 gekoppelt, der seine Leistung entsprechend einem Leistungsbedarf an das elektrische Netz abgibt. In einer Steuerung 5 wird für den jeweils auftretenden Leistungsbedarf die Drehzahl n. der Turbine 2 und ihre abgegebene Leistung über die Oeffnung $A_T$ des Leitapparates 3 geregelt. Dazu werden die Drehzahl n über eine Drehzahlmessung 9 mit einem Drehzahlgeber 8 und ebenfalls die vom Generator abgegebene Leistung gemessen und einer Drehzahlregelung oder Leistungsregelung zugeführt. Fallhöhe H und Durchfluss $Q_T$ der Turbine bestimmen die abgegebene Leistung. Für eine Regelung 11 der Leitschaufeln, wird die Oeffnung des Leitapparates $A_T$ ermittelt und entsprechend einem durch die Steuerung 5 vorgegebenen Sollwert mit einem Stellglied nachgeführt. Das Bypassventil 4 ist parallel zur Turbine 2 an der gleichen Zuleitung 7 angeschlossen. Sein Durchfluss $Q_V$ kann entsprechend den Vorgaben der Steuerung 5 durch ein Stellglied 13 verändert werden.

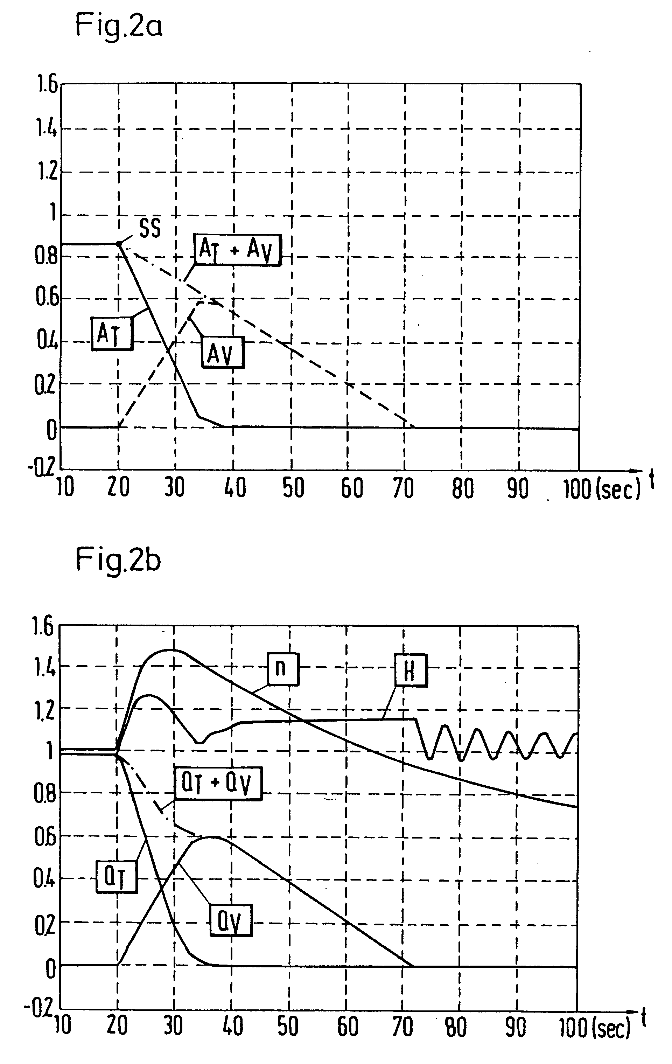

Das Bypassventil wurde bisher, wie in den Figuren 2a und 2b dargestellt, als Ausgleich bei einem durch Lastabwurf verursachten Schnellschluss SS an der Turbine 2 verwendet, indem bei Schnellschluss SS das geschlossene Bypassventil durch eine Oeffnung $A_V$ die Turbine 2 um einen Durchfluss $Q_V$ entlastete. Dabei wurde die Oeffnung $A_T$ der Turbine mit der maximal möglichen Schliessgeschwindigkeit auf annähernd Null heruntergefahren, während die Oeffnung $A_V$ für das Bypassventil so vorgegeben wurde, dass die Gesamtöffnung $A_T + A_V$ kontinuierlich aber wesentlich langsamer beispielsweise in einer fünfmal so langen Zeitspanne auf Null heruntergefahren wurde. Die daraus resultierenden Durchflüsse $Q_T$ und $Q_V$ sind in Figur 2b aufgeführt. Ausserdem ist der Drehzahlverlauf n gezeigt und ist der Druckverlauf resp. der Verlauf der Fallhöhe H aufgezeichnet.

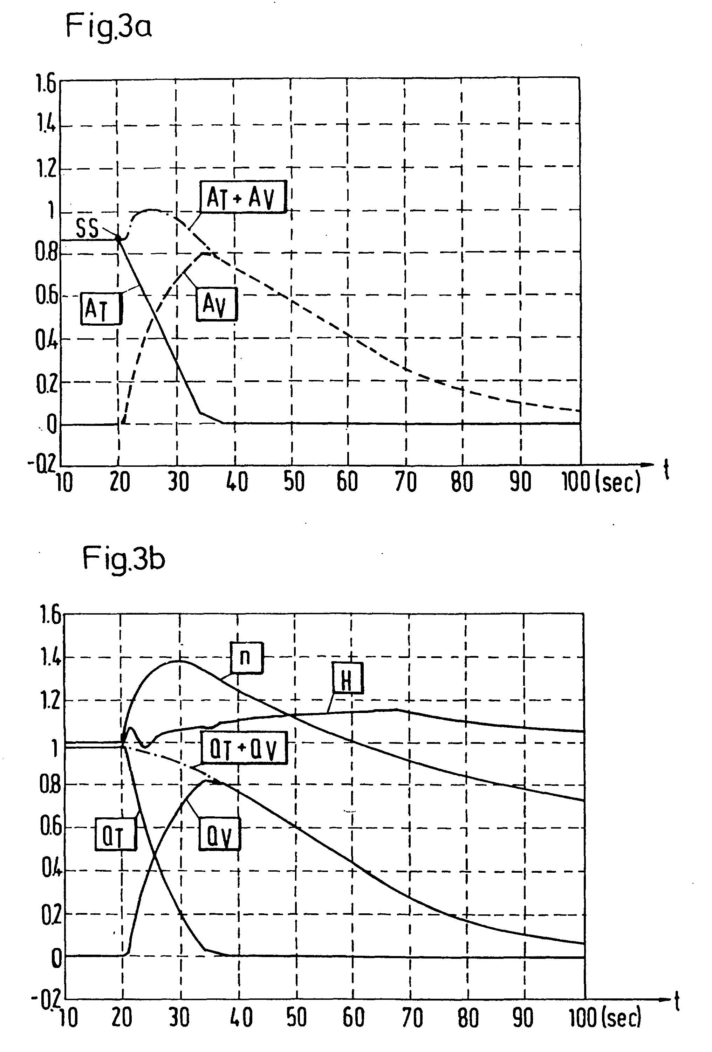

Mit einer erfindungsgemässen Regelung des Durchflusses $Q_V$ des Bypassventils 4 ergibt sich für die gleiche Anlage bei Schnellschluss SS ein zeitlicher Verlauf der Einflussgrössen nach Figur 3a und 3b. Obwohl die Verstellgeschwindigkeit für die Verringerung des Durchflusses $Q_T$ der Turbine unverändert ist, ergibt sich durch den Einbezug der Drehzahl und durch die Vorgabe einer gleichmässigen Abklingkurve $Q_{soll} = Q_T + Q_V$ ein geringerer Drehzahlanstieg und eine Fallhöhe H, deren kurzzeitige Schwankungen viel geringer sind. Dadurch, dass im richtigen Augenblick der richtige Durchfluss $Q_V$ am Bypassventil vorhanden ist, tritt die gezeigte Verbesserung ein. Die zum Vergleich in Figur 3a gezeigte Summenkurve der Oeffnungen $A_T + A_V$ zeigt, dass die Gesamtöffnung sogar kurzfristig ansteigen muss, um die notwendige Kompensation innerhalb vom Gesamtdurchfluss $Q_T + Q_v$ erreichen zu können.

Diese Art der Regelung kann aber auch bei sprunghaften Leistungsanstiegen z.B. in der Form von Treppenkurven genutzt werden, wenn das Bypassventil zum Zeitpunkt des Auftretens solcher Sprünge bereits auf einem Mindestdurchfluss $Q_{VO}$ geregelt ist, der einer Art Gleichgewichtszustand im momentanen Betrieb entspricht.

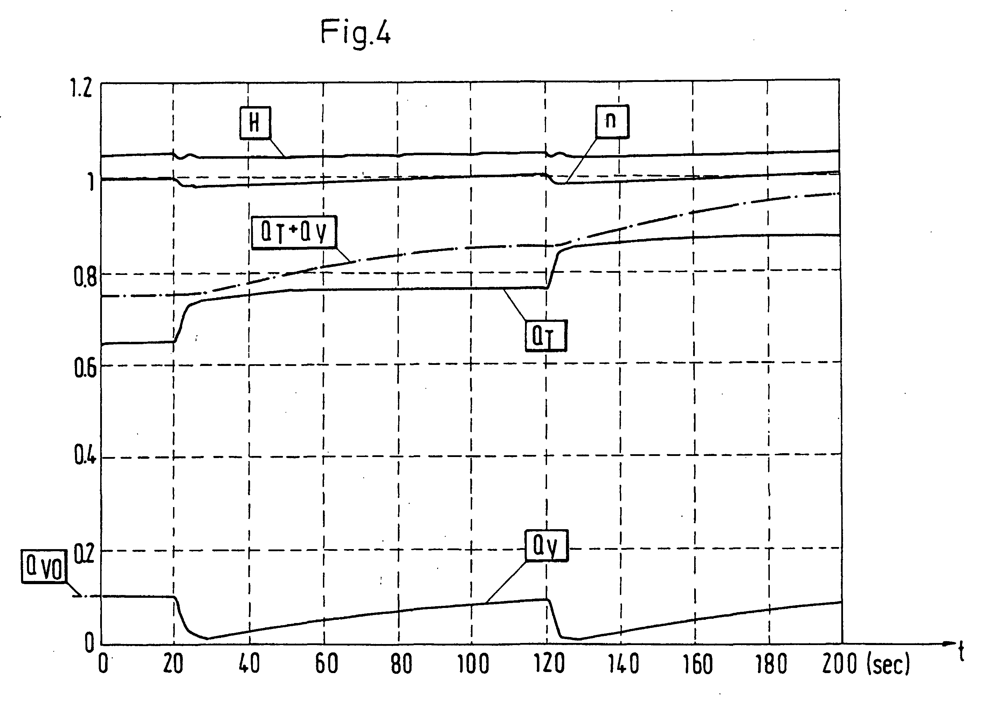

Entsprechend ist in Figur 4 für eine Wasserkraftanlage, die die gleichen Daten wie zu den Figuren 2 und 3 für ein Netz im Inselbetrieb aufweist, ein Mindestdurchfluss $Q_{VO}$ von 10 % vom Nennwert des Turbinendurchflusses $Q_T$ 100 % eingestellt. Nach 20 Sekunden und nach weiteren 100 Sekunden tritt jeweils ein sprunghafter höherer Leistungsbedarf auf, der zu einem Oeffnen der Leitschaufeln und zu einer Vergrösserung vom Turbinendurchfluss $Q_T$ führt, ohne dass Drehzahl n und Fallhöhe H grössere kurzzeitige Schwankungen verzeichnen. Dies ist möglich, weil die Regelung vom Durchfluss $Q_V$ des Bypassventils die Drehzahlschwankungen mit ihren Auswirkungen erfasst und für die Bestimmung der Durchflussmenge $Q_V$ von einer Sollkurve $Q_T + Q_V$ ausgeht, die einem sanften Uebergang zu der höheren Leistungsschwelle entspricht.

Im vorhergehenden Beispiel traten bei der ursprünglichen Regelung der Ventilöffnung $A_V$ als Funktion der Turbinenöffnung $A_T$ für den Energieverbrauch starke zufällige Aenderungen auf, wie sie bei einem Hüttenwerk mit Lichtbogenschmelzöfen vorkommen können, wobei bis +/- 10 % Schwankungen der Netzfrequenz auftraten. Aehnlich grosse Schwankungen sind für diesen Betrieb in der Fallhöhe festgestellt worden. Erst durch die Verwendung einer erfindungsgemässen Regelung des Durchflusses $Q_V$ vom Bypassventil ist es möglich, diese Schwankungen um mehr als die Hälfte zu verkleinern. Dabei zeigt es sich auch, dass bereits eine relativ kleine permanente Bypass-Wassermenge in der Grössenordnung 2-5 % in vielen Fällen genügt, um wesentliche Verbesserungen der Frequenzregelung zu erzielen. Es muss also nicht (wie in Fig. 4 dargestellt) der ganze Umfang eines sprunghaften Zuwachses des Turbinendurchflusses kompensiert werden können.

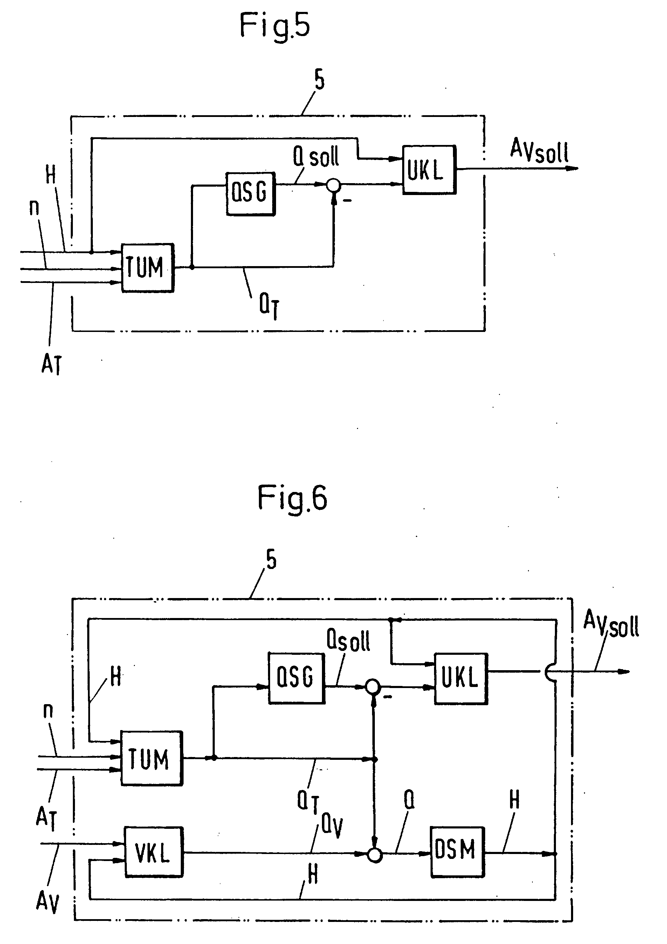

In Figur 5 ist an einem Blockdiagramm gezeigt, wie aus den Eingangsgrössen Fallhöhe H, Drehzahl n und Leitschaufelöffnung $A_T$ ein passender Sollwert für die Oeffnung $A_V$ des Bypassventiles gewonnen wird. Darin bedeuten:

TUM    ein Turbinenmodell
QSG    einen Durchfluss-Sollwertgeber
VKL    Ventilkennlinie ($Q_V$ / $\sqrt{H}$ als Funktion von $A_V$)
UKL    eine umgekehrte Ventil-Kennlinie (Umkehrfunktion) $A_V$ als Funktion von $Q_V$ / $\sqrt{H}$

Aus den drei Eingangsgrössen ergibt sich am Turbinenmodell TUM ein momentaner Turbinendurchfluss $Q_T$. Aus den Sprüngen vom Turbinendurchfluss $Q_T$ (Schnellschluss oder Lasterhöhung) wird im Durchflusssollwertgeber QSG ein Sollwert $Q_{soll} = Q_T + Q_V$ ermittelt und der effektive Turbinendurchfluss $Q_T$ dazu in Abzug gebracht, um mit dem Rest und mit der Fallhöhe H an der umgekehrten Ventilkennlinie UKL den Sollwert für die passende Ventilöffnung $A_{Vsoll}$ zu ermitteln.

In Figur 6 ist ein Blockschema gezeigt, bei dem aus den Eingangsgrössen Drehzahl n, Oeffnung des Leitapparates $A_T$ und Oeffnung des Bypassventils $A_V$ eine momentane Fallhöhe H berechnet wird. Aus einem vorläufigen Wert H ergibt sich mit der Oeffnung $A_V$ an der Ventilkennlinie VKL ein Wert $Q_V$ für den Ventildurchfluss der zusammen mit dem Wert $Q_T$ vom Turbinendurchfluss die Ermittlung der neuen Fallhöhe mit einem Druckstoss-Modell DSM ermöglicht.

Die Berechnung der Fallhöhe aufgrund des Durchflusses ist. Gegenstand der klassischen Druckstossberechnung. Sie kann mit den verschiedensten Methoden gemacht und als bekannt vorausgesetzt werden. Je nachdem, wie komplex die Anlage und wie hoch die Genauigkeitsanforderungen sind, können folgende Methoden eingesetzt werden:

• Einfachster Fall: Einfache numerische Differentiation des Durchflussverlaufs.

• Besseres Modell: Numerische Lösung eines Systems einfacher Differentialgleichungen im Regler.

• Höchster Aufwand: Charakteristikenmethode.

Wie man den Durchfluss einer Francisturbine berechnet, ist in der Literatur gut dokumentiert. Es gibt lineare und nicht-lineare Modelle. Ein bekanntes lineares Modell für regelungstechnische Untersuchungen ist

$$Q_T = a_{11} \cdot H + a_{12} \cdot n + a_{13} \cdot A_T$$

In dieser Formel bedeuten $Q_T$, H, n, $A_T$ kleine Abweichungen von einem Referenzzustand. Die Formel stammt aus dem Aufsatz: "Ramey, D.G. und Skoglund, J.W., Detailed Hydrogovernor Representation for System Stability Studies, IEEE Trans. PAS Jan. 1970, S. 106-112".

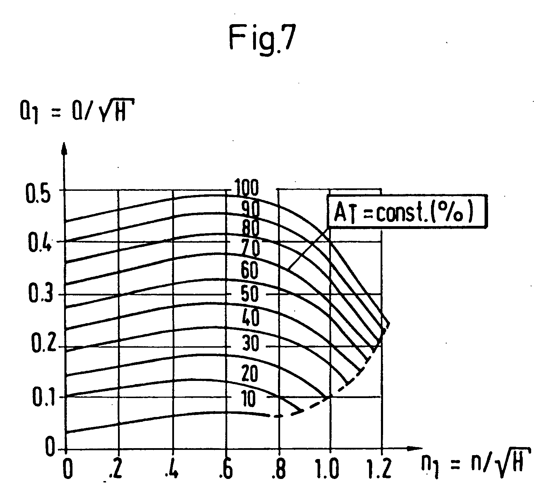

Nicht-lineare Modelle eignen sich auch zur Berechnung des Durchflusses bei grossen Aenderungen und sind daher vorzuziehen. Die gebräuchliste Darstellung ist in Figur 7 gegeben. Der Einheitsdurchfluss Q1 (d.h. auf die Fallhöhe bezogene Durchfluss) ist eine Funktion von der Leitapparat-Oeffnung $A_T$ (Kurvenparameter) und von der Einheits-Drehzahl $n_1$ (d.h. auf die Fallhöhe bezogene Drehzahl). Dieses Modell wird z.B. beschrieben im Lehrbuch: "M.H. Chaudhry, Applied Hydraulic Transients, Van Nostrand Reinhold, 1979, Seite 113".

Mit einem Druckstossmodell DSM ergibt sich fortlaufend ein Wert für die Fallhöhe H der gemäss Figur 6 bei der Ventilkennlinie VKL zur Ermittlung von $Q_V$, bei dem Turbinenmodell TUM zur Ermittlung von $Q_T$, und bei der umgekehrten Ventilkennlinie UKL zur Ermittlung des Sollwertes der Ventilöffnung $A_{Vsoll}$ verwendet wird.

Ein Vorteil der hier beschriebenen Einrichtung liegt darin, dass sie in beiden Richtungen für das Nachregeln von Leistungssprüngen verwendet werden kann. So könnte beispielsweise in der Darstellung von Figur 4 ohne weiteres ein Schnellschluss SS nach der Darstellung von Figur 3b anschliessen.

**Patentansprüche**

1. Wasserkraftanlage mit mindestens einem Generator (1) und einer daran gekoppelten Turbine (2), beispielsweise einer Francis- oder Pumpenturbine, die ein verstellbares Regulierorgan wie einen verstellbaren beschaufelten Leitapparat (3) aufweist, und mit einem Bypassventil (4), um mit einer Steuerung (5) bei einem Schnellschluss SS des Regulierorgans respektive der Leitschaufeln in Abhängigkeit von der Schaufelstellung zur Verhinderung von einem Druckstoss das Bypassventil (4) passend anzusteuern, **dadurch gekennzeichnet, dass** die Steuerung (5) durch Verarbeiten von Drehzahl n, Fallhöhe H und von der Öffnung $A_T$ des Regulierorgans beispielsweise in Form der Schaufelstellung der Leitschaufeln den momentanen Durchfluss der Turbine $Q_T$ bestimmt und als Ergänzung zu einer vorgegebenen Abklingkurve Q soll(t) einen gewünschten Ventildurchfluss $Q_V$ bestimmt und diesen entsprechend der Ventilcharakteristik als Sollwert für die Regelung der Ventilöffnung verwendet.

2. Wasserkraftanlage nach Anspruch 1, **dadurch gekennzeichnet, dass** die Abklingkurve $Q_{soll}$ (t) jeweils dem Turbinendurchfluss $Q_T$ am Beginn des Schnellschlusses angepasst ist.

3. Wasserkraftanlage mit mindestens einem Generator (1) und mit einer daran gekoppelten Turbine (2), beispielsweise einer Francis- oder Pumpenturbine, die ein Regulierorgan wie einen verstellbaren beschaufelten Leitapparat (3) aufweist, und mit einem Bypassventil (4), welches einen Ventildurchfluss $Q_V$ in einem geringen, vorgegebenen Prozentsatz vom Turbinendurchfluss aufweist, um kleine, sprunghafte Lasterhöhungen des Generators entsprechend den Schaufelbewegungen des Leitapparates zu kompensieren, **dadurch gekennzeichnet, dass** die Steuerung durch Verarbeiten von Drehzahl, Fallhöhe und Öffnung $A_T$ des Regulierorgans respektive der Schaufelstellung den momentanen Durchfluss der Turbine $Q_T$ berechnet und anhand der Änderung des Durchflusses $Q_T$ eine langsame Veränderung des Sollwertes für den Gesamtdurchfluss und aus diesem einen entsprechenden Ventildurchfluss $Q_V$ und eine dafür notwendige Ventilöffnung $A_V$ berechnet.

4. Wasserkraftanlage nach einem der Ansprüche 1 bis 3, **dadurch gekennzeichnet, dass** der momentane Durchfluss der Turbine $Q_T$ mit einem mathematischen Simulationsmodell berechnet ist, bei dem als Eingangsgrössen die Werte der Drehzahl n, der Oeffnung $A_T$ des Regulierorgans respektive der Schaufelstellung des Leitapparates und die Fallhöhe H benutzt werden, um den momentanen Durchfluss der Turbine $Q_T$ und falls notwendig dessen

Veränderung $\frac{dQ_T}{dt}$ zu erhalten.

5. Wasserkraftanlage nach Anspruch 4, **dadurch gekennzeichnet, dass** als zusätzliche Eingangsgrösse die tatsächliche Oeffnung des Ventils $A_V$ erfasst ist und dass mit dieser im mathematischen Simulationsmodell die Fallhöhe H mitberechnet ist, um auf deren direkte Messung verzichten zu können.

6. Wasserkraftanlage nach einem der Ansprüche 1 bis 5, **dadurch gekennzeichnet, dass** die Steuerung für das Bypassventil mit in der Steuerung der Turbine enthalten ist.

7. Wasserkraftanlagen nach Anspruch 2, **dadurch gekennzeichnet, dass** zur Berechnung der Abklingkurve $Q_{soll}$(t) an einer Turbine mit Schnellschluss ein Durchfluss $Q_T$ von einer weiteren Turbine miteinbezogen ist.

8. Wasserkraftanlage mit mehreren Turbinen nach einem der Ansprüche 1 bis 3, **dadurch gekennzeichnet, dass** ein übergeordneter Regler Berechnungs- und Regelfunktionen für mehrere Turbinen mit zugeordneten Bypassventilen durchführt.

9. Wasserkraftanlage nach einem der Ansprüche 1 bis 3, **dadurch gekennzeichnet, dass** die Steuerung (5) in beiden Richtungen eine Berechnung des Sollverlaufs $Q_{Soll}$(t) der Wassermenge bei sprunghaften Lastwechseln des Generators durchführt.

**Claims**

1. Hydraulic power station with at least one generator (1) and associated turbine (2), for instance a Francis or pump turbine having an adjustable governor organ such as an adjustable bladed guide-vane mechanism (3), and with a by-pass valve (4) in order to appropriately control the by-pass valve (4) during a tripping SS of the governor organ or guide vanes with a control mechanism (5) as a function of blade angle so as to prevent a water hammer, **characterised in that** the control mechanism (5) determines the instantaneous flow $Q_T$ through the turbine by a processing of turbine speed n, fall head H, and opening $A_T$ of the governor organ, for instance given by the blade angle of the guide vanes, and a desired flow $Q_v$ through the valve as a complement to a preset decay curve $Q_{nom}$(t), and uses this flow in accordance with the valve characteristics as the nominal value for adjustment of the valve opening.

2. Hydraulic power station according to claim 1, **characterised in that** the decay curve $Q_{nom}$(t) is always adapted to the flow $Q_T$ through the turbine at the start of tripping.

3.  Hydraulic power station with at least one generator (1) and associated turbine (2), for instance a Francis or pump turbine having a governor organ such as an adjustable bladed guide-vane mechanism (3), and with a by-pass valve (4) having a flow $Q_V$ through the valve that is a small, preset percentage of the flow through the turbine in order to compensate small sudden generator load increases in accordance with the blade motions of the guide-vane mechanism, **characterised in that** the control mechanism calculates the instantaneous flow $Q_T$ through the turbine by processing the turbine speed, fall head, and opening $A_T$ of the governor organ or blade angle, and from the change in flow $Q_T$ a slow change in nominal value for the total flow, and from this value a corresponding flow $Q_V$ through the valve as well as a valve opening Av required for it.

4.  Hydraulic power station according to one of the claims 1 to 3, **characterised in that** the instantaneous flow $Q_T$ through the turbine is computed with a mathematical simulation model where the values of turbine speed n, opening $A_T$ of the governor organ or blade angle of the guide-vane mechanism, and the fall head H are used as the input variables in order to obtain the instantaneous flow $Q_T$ through the turbine and, if required, its variation $dQ_T/dt$.

5.  Hydraulic power station according to claim 4, **characterised in that** as an additional input variable the true opening $A_V$ of the valve is included and accounted for when computing the fall head H in the mathematical simulation model so that one can do without a direct measurement of this head.

6.  Hydraulic power station according to one of the claims 1 to 5, **characterised in that** the control mechanism for the by-pass valve is comprised in the control mechanism of the turbine.

7.  Hydraulic power stations according to claim 2, **characterised in that** a flow $Q_T$ through a further turbine is included when computing the decay curve $Q_{nom}(t)$ of a turbine with tripping mechanism.

8.  Hydraulic power station with plural turbines according to one of the claims 1 to 3, **characterised in that** a higher-order controller performs computing and control functions for plural turbines with associated by-pass valves.

9.  Hydraulic power station according to one of the claims 1 to 3, **characterised in that** the control mechanism (5) performs a calculation of the nominal curve $Q_{nom}(t)$ of water volume during sudden generator load changes in either direction.

## Revendications

1.  Centrale hydraulique, équipée d'au moins un générateur (1) et d'une turbine (2) lui étant couplée, par exemple une turbine Francis ou une turbine-pompe, présentant un organe de régulation réglable, tel qu'un distributeur (3) réglable, équipé d'aubes, et avec une soupape de dérivation (4), et avec une commande (5), agissant en cas de fermeture rapide des SS de l'organe de régulation, respectivement des aubes directrices, en fonction de la position ou calage des aubes, pour commander de façon adaptative la soupape de dérivation (4), afin d'empêcher tout phénomène de coup de bélier, **caractérisée en ce que** la commande (5) détermine le débit instantané de la turbine $Q_T$, par traitement de la vitesse de rotation n, de la hauteur de chute H et de l'ouverture $A_T$ de l'organe de régulation, exprimée par exemple sous la forme de la position ou calage des aubes directrices et, en tant que complément à une courbe d'amortissement ou de décroissance $Q_{consigne}$ (t) prédéterminée, détermine un débit de soupape $Q_V$ souhaité et utilise, celui-ci de manière correspondante à la caractéristique de soupape, en tant que valeur de consigne pour la régulation de l'ouverture de soupape.

2.  Centrale hydraulique selon la revendication 1, **caractérisée en ce que** la courbe d'amortissement $Q_{consigne}$ (t) est chaque fois adaptée au débit de turbine $Q_T$ au début de la fermeture rapide.

3.  Centrale hydraulique comportant au moins un générateur (1) et une turbine (2) lui étant couplée, par exemple une turbine Francis ou une turbine-pompe, présentant un organe de régulation réglable, tel qu'un distributeur (3) réglable équipé d'aubes, et avec une soupape de dérivation (4), qui présente un débit de soupape $Q_V$ qui est un faible pourcentage, prédéterminé, du débit de la turbine afin de compenser les petites augmentations de charge, par à-coups, du générateur, de manière correspondante aux manoeuvres des aubes du distributeur à aubes, **caractérisée en ce que**, par traitement de la vitesse de rotation, de la hauteur de chute et de l'ouverture $A_T$ de l'organe de régulation, respectivement de la position de calage des aubes, la commande calcule le débit momentané de la turbine $Q_T$ et, à l'aide de la modification du débit $Q_T$, calcule une variation lente de la valeur de consigne du débit global et, à partir de celle-ci, calcule un débit de soupape $Q_V$ correspondant et une ouverture de soupape $A_V$ nécessaire pour cela.

4.  Centrale hydraulique selon une des revendications 1 à 3, **caractérisée en ce que** le débit momentané de la turbine $Q_T$ est calculé avec un modèle de simulation mathématique, pour lequel on utilise comme grandeurs d'entrée, les valeurs de la vitesse de rotation n, de l'ouverture $A_T$ de l'organe de régulation, respectivement de la position de calage du distributeur, et la hauteur de chute H, afin d'obtenir le débit momentané de la turbine $O_T$ et, en cas de nécessité, sa variation $dQ_T/dt$.

5. Centrale hydraulique selon la revendication 4, **caractérisée en ce que**, à titre de grandeur d'entrée supplémentaire, on appréhende le degré d'ouverture effectif de la soupape $A_V$ et **en ce que**, avec celui-ci, on introduit dans le calcul, dans un modèle de simulation mathématique, la hauteur de chute H pour renoncer à sa mesure directe.

6. Centrale hydraulique selon l'une des revendications 1 à 5, **caractérisée en ce que** la commande de la soupape de dérivation est intégrée dans la commande de la turbine.

7. Centrales hydrauliques selon la revendication 2, **caractérisées en ce que**, pour calculer la courbe d'amortissement $Q_{consigne}(t)$, sur une turbine à fermeture rapide, on fait entrer en ligne de compte un débit $Q_T$ d'une autre turbine.

8. Centrale hydraulique équipée de plusieurs turbines selon l'une des revendications 1 à 3, **caractérisée en ce qu'**un régulateur hiérarchiquement supérieur assure des fonctions de calcul et de régulation pour plusieurs turbines, ayant des soupapes de dérivation associées.

9. Centrale hydraulique selon l'une des revendications 1 à 3, **caractérisée en ce que** la commande (5) effectue dans les deux sens un calcul de l'allure de consigne $Q_{consigne}(t)$ de la quantité d'eau, en cas de fluctuation par à-coups de la charge du générateur.

# Fig.1

## Fig.2a

## Fig.2b

EP 0 822 332 B1

## Fig.3a

## Fig.3b

11

# Fig.4

EP 0 822 332 B1

## Fig.5

## Fig.6

# Fig.7